# EUROPÄISCHE PATENTSCHRIFT

(11) **EP 1 915 729 B1**
(45) Veröffentlichungstag und Bekanntmachung des Hinweises auf die Patenterteilung: **02.05.2018**
(21) Anmeldenummer: 06791306.1
(22) Anmeldetag: 10.08.2006
(51) Int. Cl.: G06Q 20/00, G06F 21/00

(54) **VORRICHTUNG, VERFAHREN UND ANLAGENSYSTEM ZUR INTERAKTION MIT EINEM BENUTZER SOWIE VERFAHREN ZUR AUFNAHME EINES BENUTZERS IN EINE GESCHLOSSENE BENUTZERGRUPPE**
APPARATUS, METHOD AND SYSTEM FOR INTERACTING WITH A USER AND METHOD FOR INCLUDING A USER IN A CLOSED USER GROUP
DISPOSITIF, PROCEDE ET SYSTEME POUR ASSURER UNE INTERACTION AVEC UN UTILISATEUR ET PROCEDE POUR ACCUEILLIR UN UTILISATEUR DANS UN GROUPE FERME D'UTILISATEURS

(30) Priorität: 10.08.2005 DE 102005038104; 25.08.2005 US 711251 P
(43) Veröffentlichungstag der Anmeldung: 30.04.2008
(73) Patentinhaber: S + M Schaltgeräte-Service + Vertriebsgesellschaft mbH, 41812 Erkelenz/Industriegebiet Ost (DE)
(72) Erfinder: STUKE, Thorsten, 22605 Hamburg (DE); MESCH, Heiko, 41812 Erkelenz (DE)
(74) Vertreter: Farago-Schauer, Peter Andreas
(86) Internationale Anmeldenummer: PCT/DE2006/001396
(87) Internationale Veröffentlichungsnummer: WO 2007/016920

(56) Entgegenhaltungen:
- EP-A2- 0 869 688
- EP-A2- 1 316 929
- WO-A-00/77697
- WO-A-01/99378
- WO-A-02/37240
- WO-A-2005/052869
- DE-A1- 10 200 588
- US-B1- 6 529 591

## Beschreibung

Die Erfindung betrifft ein Verfahren zur Interaktion einer Vorrichtung in Form eines Verkaufsautomaten mit einem Benutzer.

In vielen Bereichen des öffentlichen Lebens stellt sich die Aufgabe, sicherzustellen, dass nur Personen mit bestimmten Eigenschaften bestimmte Geschäfte tätigen dürfen. Hier sei insbesondere an den Verkauf potentiell jugendgefährdender Waren wie beispielsweise Rauchwaren über Automaten oder an den Bezug jugendgefährdender Daten über das Internet gedacht.

Während es die Face-to-Face-Kontrolle durch einen Menschen immer ermöglicht, notfalls über Vorlage eines Personalausweises oder eines anderen Idenfitikationsdokuments das Alter des potentiellen Käufers zu prüfen, ist bei einer solchen Kontrolle eine hohe Kostenbelastung für den Verkäufer gegeben. Es ist daher anzustreben, eine solche Kontrolle weitestgehend automatisiert durchführbar zu machen. So sollen insbesondere Verkaufsautomaten und interne Verkaufsplattformen in der Lage sein, die Zugehörigkeit eines potentiellen Käufers zu einer bestimmten Benutzergruppe, insbesondere zu einer bestimmten Altersklasse, möglichst sicher festzustellen.

Die DE 199 15 671 A1 zeigt ein Telekommunikationssystem zum Zahlen von Kosten, bei welchem bestimmte Informationen wie beispielsweise die Altersgruppe elektronisch über ein Mobilfunknetz übertragen werden.

Die JP 2002-092702 A zeigt einen Verkaufsautomaten, in welchen ein Benutzer einer Smartcard einführt, auf welcher ein Alterskennzeichen gespeichert ist.

Die US 2001/0047223 A1 zeigt ebenfalls einen Verkaufsautomaten, welcher über eine Smartcard bedient werden kann, wobei die Smartcard ein Altersmerkmal und ein Passwort enthält.

In der DE 20 2004 001 549 U1 wird ein Verkaufsautomat vorgeschlagen, der von einer Smartcard eine unlöschbare Altersinformation des Benutzers ausliest und über eine GSM-Sendeeinheit Verbindung zu einem Kundenkonto aufnimmt, um die Zahlung zu veranlassen.

In der JP 2001-258066 A wird ein Verkaufsautomat vorgeschlagen, welcher eine Alterskontrolle ermöglicht, ohne dass der Benutzer eine Smartcard mit sich führen muss. So ruft der Benutzer von seinem Mobiltelefon das Verkaufsgerät über eine dort integrierte GSM-Sende- und Empfangseinheit an, und von dort aus wird eine Datenbank angerufen. In dieser Datenbank muss der Benutzer vorher registriert worden sein.

Die WO 01/99378 A1 offenbart eine Vorrichtung zur Interaktion mit einem Benutzer einschließlich dessen Authentifizierung mittels eines Mobiltelefons, wobei zur Authentifizierung Daten zum Mobiltelefon und/oder in Gegenrichtung übertragen werden, wobei die Vorrichtung dazu eingerichtet ist, zur Interaktion erforderliche Daten über mindestens einen nicht-terminierten Anruf entgegenzunehmen und/oder zu versenden.

Weiterer Stand der Technik findet sich in der WO 00/77697 A1, der EP 1 316 929 A2, der WO 02/37240 A, der EP 0 869 688 A2, der DE 102 00 588 A1 und der WO 2005/052869 A.

Der Erfindung liegt die Aufgabe zugrunde, ein verbessertes Verfahren zur Interaktion mit Verkaufsvorrichtung zur Verfügung zu stellen.

Gemäß der hier vorliegenden Erfindung löst diese Aufgabe ein Verfahren mit den Merkmalen des Patentanspruchs.

Das Verfahren zeigt eine vorteilhafte Interaktion zwischen einem Benutzer, einem Verkaufsautomaten und einer Datenbank.

Begrifflich sei zunächst erläutert, dass die Vorrichtung dazu eingerichtet sein soll, in Interaktion mit dem Benutzer zu treten. Als Interaktion wird ein Vorgang verstanden, welchen der Benutzer anstößt, insbesondere um einen Kauf zu tätigen. Bei einem solchen Kauf kann beispielsweise nach der Art der Ware eine Altersbeschränkung für potentielle Käufer vorgegeben sein, insbesondere vom Gesetzgeber. Somit soll die Interaktion eine Authentifizierung des Benutzers dahingehend enthalten, dass die Vorrichtung in die Lage versetzt wird, abhängig vom Ergebnis der Authentifizierung in verschiedenen Weisen fortzufahren. Bei erfolgter Authentifizierung des Benutzers für die von ihm angestoßene und beabsichtigte Reaktion der Vorrichtung kann die Vorrichtung in dieser Weise reagieren, wohingegen die Vorrichtung die Aktion ablehnen wird, wenn die Authentifizierung nicht erfolgt.

Ein Mobiltelefon eignet sich sehr gut zur Authentifizierung einer Person, weil Mobiltelefone schon an sich einen recht hohen Wert darstellen. Zudem können über spezielle Rufnummern sehr hohe Kosten erzeugt werden, wenn das Telefon missbraucht wird. Es ist deshalb davon auszugehen, dass ein Besitzer eines Mobiltelefons dieses in der Regel vor einem Abhandenkommen schützen wird. So wird es insbesondere nicht in die Hände Minderjähriger gelangen. Sollte dies doch der Fall sein, so kann auf dem angeschlossenen Serversystem die Rufnummer zu jedem beliebigen Zeitpunkt unmittelbar gesperrt werden.

Aus wirtschaftlichen Gründen wird die zur Interaktion eingerichtete Vorrichtung in der Regel nicht einheitlich mit einer Datenbank ausgeführt sein, sondern die Datenbank ist räumlich separat angeordnet und über eine Datenbankschnittstelle zugänglich. Um über das Mobiltelefon die Authentifizierung durchzuführen, werden daher Daten zum Mobiltelefon und/oder in Gegenrichtung übertragen. Dies gilt sogar dann, wenn die Datenbank in speziellen Fällen unmittelbar an der Vorrichtung angeordnet ist.

Gemäß der Erfindung wird zumindest ein Teil der zur Authentifizierung oder für den restlichen Vorgang der Interaktion erforderlichen Daten über mehrere nicht-terminierte Anrufe ausgetauscht. Ein nicht-terminierter Anruf ist - mit einfachen Worten ausgedrückt - ein Anruf, bei welchem der Angerufene beziehungsweise das angerufene Gerät den Anruf nicht entgegennimmt. Dies geschieht entweder dadurch, dass der Angerufene beziehungsweise das angerufene Gerät den Anruf ablehnt, sobald die Clip-ID übertragen und erkannt ist, also die mit dem Anruf übertragene Rufnummer, oder dass der Anruf von der anrufenden Seite aus vor einer Annahme beendet wird.

Der Vorteil besteht darin, dass Daten über Telefonnetze und/oder Mobiltelefonnetze auf diese Weise sehr schnell und sicher übertragen werden können. In der Regel werden bislang Textnachrichten versendet, welche aber je nach Auslastungssituation des Mobilfunknetzes eine lange Laufzeit haben können. Insbesondere erkennt ein versendendes Gerät nicht, ob und zu welchem Zeitpunkt ein solches Datenpaket beim Empfängergerät ankommt. Mobiltelefonnetze sind demgegenüber dazu eingerichtet, dass ein Anrufer während des Anrufs einen Klingelton wahrnimmt, sobald die Verbindung aufgebaut ist. Das anrufende Gerät kann also nach dem vorgestellten Aspekt der Erfindung exakt überwachen, dass der Anruf beim Empfänger angekommen ist.

Zudem ist unmittelbar ersichtlich, dass sich eine solche Datenübertragung das Mobilfunknetz ohne laufende Kosten zunutze machen kann.

Die Vorrichtung ist ein Verkaufsautomat. Es wurde bereits erläutert, dass gerade bei Verkaufsautomaten regelmäßig ein Datenabgleich erforderlich sein kann. Der Datenabgleich kann sowohl unmittelbar zwischen dem Verkaufsautomaten - beziehungsweise generell der Vorrichtung - und dem Mobiltelefon des Benutzers erfolgen. Ebenso kann der Datenabgleich zwischen einer Datenbankschnittstelle und dem Mobiltelefon erfolgen, was bevorzugt von der Vorrichtung an der Datenbankschnittstelle angestoßen wird.

Gerade Verkaufsautomaten sind häufig in flächendeckenden Netzen aufgestellt, was eine große Anzahl an Automaten erforderlich macht. Zudem sind die Handelsmargen für Automatenware eher niedrig, sodass sich die Möglichkeit der kostenlosen Datenübertragung über Mobilfunknetze bei Verkaufsautomaten besonders vorteilhaft auswirkt, sobald diese mit einem entsprechenden Sende- und/oder Empfangsmodul ausgestattet sind.

Ein Verkaufsautomat kann insbesondere dazu eingerichtet sein, Waren nur nach einer Alterskontrolle zum Verkauf abzugeben, wobei er Mittel zum Auswerten eines Altersmerkmals anhand des nicht-terminierten Anrufs aufweist. So kann der nicht-terminierte Anruf Daten dadurch übertragen, dass als Clip-ID eine bestimmte Zahlenfolge übertragen wird, welche die Vorrichtung interpretieren kann. So kann beispielsweise bei Mitsenden einer "1" an einer bestimmten Stelle der Clip-ID die Information zur Vorrichtung gesendet werden, dass der Benutzer eine bestimmte Altersklasse aufweist, während eine andere Ziffer an dieser Stelle für eine andere Altersklasse stehen kann.

Die Codierung der zu übertragenden Information kann über mehrere aufeinander folgende nicht-terminierte Anrufe aufgeteilt sein.

Es wird vorgeschlagen, dass die Vorrichtung dazu eingerichtet ist, mit einer räumlich separat angeordneten Datenbankschnittstelle über einen nicht-terminierten Anruf zu kommunizieren. Dies setzt voraus, dass auch die Datenbankschnittstelle entsprechend zum Kommunizieren mit der Vorrichtung eingerichtet ist. Insbesondere können beide einen tabellenförmigen Code zum Übertragen verschiedener Werte benutzen und diesen Code über eine mitgesendete Clip-ID über den nicht-terminierten Anruf zum jeweils anderen Gerät übertragen, was dort jeweils erkannt wird und anhand der Tabelle wieder rückübersetzt, also decodiert, wird.

Es wird vorgeschlagen, dass die Vorrichtung dazu eingerichtet ist, mit der Datenbankschnittstelle über einen nicht-terminierten Anruf über wahlweise mindestens zwei unterschiedliche Telefonnummern zu kommunizieren. Nach diesem Aspekt sind die Vorrichtung und die Datenbankschnittstelle dazu eingerichtet, je nach vorhergehendem Ereignis sich über zwei unterschiedliche Telefonnummern beziehungsweise zwei unterschiedliche Clip-IDs mit einem nicht-terminierten Anruf zu kontaktieren. Dasjenige Gerät, welches den Anruf aufbaut, entscheidet ja nach vorhergehendem Ereignis, welche Clip-ID verwendet wird. Das angerufene Gerät ist in der Lage, die beiden möglichen Clip-IDs - oder die zahlreichen Clip-IDs - voneinander zu unterscheiden und anhand dieser Nummern bestimmte weitere Ereignisse auszulösen.

Die verschiedenen Telefonnummern beziehungsweise Clip-IDs können vor allem Telefonnummern in einem geschlossenen Nummernkreis sein, welche von einem Mobilfunkprovider für den Betreiber der Vorrichtung reserviert worden sind. In einem solchen Falle wären die unterschiedlichen Telefonnummern beziehungsweise Clip-IDs beispielsweise in der Tat unterschiedliche Telefonnummern im Mobilfunknetz des Providers.

Eine Alternative liegt darin, eine Mobilfunknummer zu verwenden, welche vom Provider vorgesehen wurde, und an diese verschiedene Suffixe anzuhängen. Auf diese Weise kann mit nur einer Nummer eine große Variation an unterschiedlichen Zahlen als Informationscode angehängt werden.

Nach Überlegungen der Erfinder kann es Sinn machen, dass die Vorrichtung mit der Datenbankschnittstelle über mindestens 10 unterschiedliche Telefonnummern, bevorzugt über mindestens 30 Telefonnummern, beziehungsweise Clip-IDs kommunizieren kann. Entsprechend hoch ist die Anzahl der möglichen Steuerbefehle, wobei eine Vervielfachung der möglichen codierten Steuerbefehle dadurch erreicht werden kann, dass zwei nicht-terminierte Anrufe nacheinander durchgeführt werden. Anders als beim Versenden von Textnachrichten besteht bei nicht-terminierten Anrufen nicht die Gefahr, dass diese in einer falschen Reihenfolge ankommen könnten.

Es wurde bereits erläutert, dass die unterschiedlichen Telefonnummern dadurch erzeugt sein können, dass mindestens zwei dieser Telefonnummern einen einheitlichen Stamm aufweisen, welcher jeweils mit einem unterschiedlichen Suffix versehen ist.

Es wird vorgeschlagen, dass die Vorrichtung eine Datenverarbeitungsanlage aufweist oder ist, welche über eine Internetverkaufsplattform zugänglich ist. Gerade im Internet stellt sich vermehrt die Aufgabe, eine Authentifizierung eines Benutzers durchzuführen. Hierfür eignet sich ebenfalls das Mobiltelefon des Benutzers, weil dieses - wie bereits erläutert - nur ungern aus der Hand gegeben wird.

Bevorzugt ist eine Vorrichtung der vorgeschlagenen Art dazu eingerichtet, mit einer geschlossenen Benutzergruppe zu interagieren, wobei die geschlossene Benutzergruppe anhand einer räumlich von der Vorrichtung separaten Datenbank definiert ist. Der Vorteil beim Interagieren mit einer geschlossenen Benutzergruppe ist, dass von Benutzern der geschlossenen Benutzergruppe die Telefonnummern idealerweise bereits bekannt und in der Datenbank gespeichert sind. Wenn die Datenbank zusätzlich räumlich getrennt von der Vorrichtung ist, kann die Vorrichtung frei aufgestellt werden, beispielsweise auch im öffentlichen Zugangsbereich, was gerade für Verkaufsautomaten von Vorteil ist. Der Datenaustausch erfolgt über das Mobiltelefonnetz.

Nach einem zweiten vorteilhaften Aspekt löst die gestellte Aufgabe ein Anlagensystem mit mehreren Vorrichtungen, mit einer Datenbank und mit einer Datenbankschnittstelle, wobei die Datenbankschnittstelle dazu eingerichtet ist, mit den einzelnen Vorrichtungen und/oder mit einem Mobiltelefon eines Benutzers über nicht-terminierte Anrufe zu kommunizieren.

Diesem Aspekt liegt die Erkenntnis zugrunde, dass eine Datenbank mit einer Datenbankschnittstelle dazu geeignet ist, eine Vielzahl einzelner Vorrichtungen zu steuern und mit Införmationen zu besenden, wobei sämtliche Informationen über die nicht-terminierten Anrufe hinsichtlich des Empfangs am empfangenden Gerät für das versendende Gerät nachvollziehbar sind. Zudem lässt sich die gesamte Kommunikation zwischen den Geräten kostenlos abwickeln.

Nach der Erfindung löst die gestellte Aufgabe also ein Verfahren zur Interaktion einer Vorrichtung mit einem Benutzer einschließlich dessen Authentifizierung mittels eines Mobiltelefons, wobei zur Authentifizierung Daten zum Mobiltelefon und/oder in Gegenrichtung übertragen werden, und wobei zur Interaktion erforderliche Daten über mindestens einen nicht-terminierten Anruf übertragen werden. Ein solches Verfahren wurde vorstehend bereits erläutert.

Auch wurde bereits darauf hingewiesen, dass über unterschiedliche wahlweise zu verwendende Telefonnummern unterschiedliche Ereignisse ausgelöst werden können, so dass auch logisch komplexe Abläufe über die nicht-terminierten Anrufe gesteuert werden können.

Insbesondere ist es von Vorteil, dass die Vorrichtung mit einer Datenbankschnittstelle über einen nicht-terminierten Anruf kommuniziert und der Benutzer mit der Datenbankschnittstelle ebenfalls über einen nicht-terminierten Anruf kommuniziert. Auf diese Weise fällt eine unmittelbare Kommunikation zwischen dem Benutzer und der Verkaufsvorrichtung nicht notwendigerweise an. Vielmehr kann beispielsweise auf der Vorrichtung eine Telefonnummer angegeben sein, welche der Benutzer mit seinem Mobiltelefon anzurufen hat. Diese kann beispielsweise eine Stammnummer haben und - je nach gewünschter Ware aus der Vorrichtung - ein entsprechendes Suffix aufweisen. Der Benutzer kann sogleich die sich daraus ergebende Telefonnummer anrufen, welche ihn zu der Datenbankschnittstelle führt. Die Datenbankschnittstelle greift auf die Datenbank zu und kann die Authentifizierung des Benutzers durchführen, insbesondere dann, wenn dieser an die Telefonnummer eine Geheimzahl angehängt hat. Unmittelbar nachdem in der Datenbank bekannt ist, dass der Benutzer authentifiziert ist, kann diese Information direkt von der Datenbankschnittstelle an die Vorrichtung übertragen werden.

Nach einem vierten, sehr breiten Aspekt löst die gestellte Aufgabe eine Vorrichtung, welche zur Interaktion mit einem Benutzer eingerichtet ist und hierbei über eine Datenbankschnittstelle erforderliche Daten zu einer räumlich separaten Datenbank überträgt und/oder von dort empfängt, wobei die Vorrichtung dazu eingerichtet ist, die erforderlichen Daten über mindestens einen nicht-terminierten Anruf zu versenden und/oder entgegenzunehmen.

Nach diesem Aspekt ist es nicht erforderlich, eine Authentifizierung über ein Mobiltelefon vorzunehmen. Vielmehr reicht es bereits aus, wenn die Vorrichtung dazu eingerichtet ist, erforderliche Daten über einen nicht-terminierten Anruf fallweise unterschiedlich zu versenden oder auszuwerten. Der Benutzer kann beispielsweise direkt über eine Eingabeeinrichtung mit der Vorrichtung kommunizieren oder beispielsweise eine Smartcard mit sich führen. Lediglich die für den Benutzer unsichtbare Kommunikation zwischen der Vorrichtung und der Datenbankschnittstelle muss nach diesem Aspekt der Erfindung über den nicht-terminierten Anruf erfolgen.

Es versteht sich, dass sich dieser Aspekt auch in einem Anlagensystem verwirklichen lässt. Nach einem fünften Aspekt löst die gestellte Aufgabe daher ein Anlagensystem mit mehreren Vorrichtungen, mit einer Datenbank und mit einer Datenbankschnittstelle, wobei die Datenbankschnittstelle dazu eingerichtet ist, mit den einzelnen Vorrichtungen über nicht-terminierte Anrufe zu kommunizieren.

Gleiches gilt für einen sechsten Aspekt, gemäß welchem die Aufgabe durch ein Verfahren zur Interaktion einer Vorrichtung mit einem Benutzer der Vorrichtung gelöst wird, wobei erforderliche Daten von der Vorrichtung zu einer Datenbankschnittstelle einer räumlich separaten Datenbank übertragen und/oder in Gegenrichtung empfangen werden, und wobei die erforderlichen Daten über einen nicht-terminierten Anruf übertragen werden.

Während die vorstehend geschilderten Aspekte und Varianten weitestgehend auf den Verkauf von Waren oder Dienstleistungen an Automaten oder über das Internet ausgerichtet sind, löst die gestellte Aufgabe nach einem siebten Aspekt ein Verfahren zur Aufnahme eines Benutzers in eine geschlossene Benutzergruppe - hier nicht beansprucht -, wobei zum Benutzer über eine Einrichtung eines Kreditinstituts auf ein Altersmerkmal aus einem Datenbestand des Kreditinstituts zugegriffen wird und eine Mobiltelefonrufnummer über einen nicht-terminierten Anruf als authentifiziert einer Datenbank für die geschlossene Benutzergruppe hinzugefügt wird.

Mit diesem Aspekt ist es äußerst kostengünstig und betriebssicher möglich, einen neuen Benutzer zu einer geschlossenen Benutzergruppe hinzu zu fügen.

Technisch wird das Verfahren über eine Einrichtung eines Kreditinstituts abgewickelt, insbesondere über einen Geldautomaten oder über einen zum Electronic-Banking eingerichteten Server des Kreditinstituts. Sobald sich ein Kunde bei einem Kreditinstitut legitimiert, sei es über eine PIN an einem Geldautomaten oder eine Internet-PIN im Online-Banking, kennt die entsprechende Einrichtung des Kreditinstituts die Stammdaten des Benutzers, hierunter insbesondere auch dessen Geburtsdatum und somit sein Alter.

Das vorgeschlagene Verfahren nutzt dies aus und greift auf eines dieser Altersmerkmale aus dem Datenbestand des Kreditinstituts zu. Eine vom Benutzer angegebene Telefonnummer kann sodann praktisch ohne Risiko eines Missbrauchs als einem Benutzer in einem bestimmten Alter in der Datenbank zugewiesen werden. Um bei einem solchen Verfahren Missbrauch zu betreiben, ist es erforderlich, sich einen Zugang zur Einrichtung des Kreditinstituts zu verschaffen, beispielsweise über EC-Karte und PIN. Die meisten Menschen sind jedoch zumindest was eine Kreditinstitutkarte und die zugehörige Geheimzahl angeht sehr vorsichtig. Sollte ein Mobiltelefon dennoch abhanden kommen, kann es anhand seiner SIM-Karten-Nummer jederzeit durch den Mobilfunkprovider gesperrt werden.

Wer im Besitz des gültigen Zugangs zum Kreditinstitut ist, kann eine beliebige Mobiltelefonnummer authentifizieren, wobei es von Vorteil ist, wenn über eine Kommunikation mit dem Mobiltelefon eine Bestätigung angefordert wird. Auf diese Weise kann erreicht werden, dass ein Benutzer sowohl im Besitz des Zugangs zum Kreditinstituts als auch im Besitz des Mobiltelefons sein muss, um dieses für eine Altersklasse zu authentifizieren.

Ist der Benutzer einmal in der Datenbank mit der Mobiltelefonnummer und der Altersklassifizierung gespeichert, kann er ohne weiteres von den eingangs geschilderten Vorrichtungen, Verfahren und Anlagensystemen profitieren.

Die Erfindung wird nachfolgend anhand einiger möglicher Abläufe unter Bezugnahme auf die Zeichnung näher erläutert. Dort zeigen
Figur 1 eine schematische Darstellung eines - hier nicht beanspruchten - Registriervorgangs ein einem Geldausgabeautomaten und
Figur 2 eine schematische Darstellung des technischen Ablaufs eines Kaufvorgangs an einem Verkaufsautomaten gemäß der Erfindung.

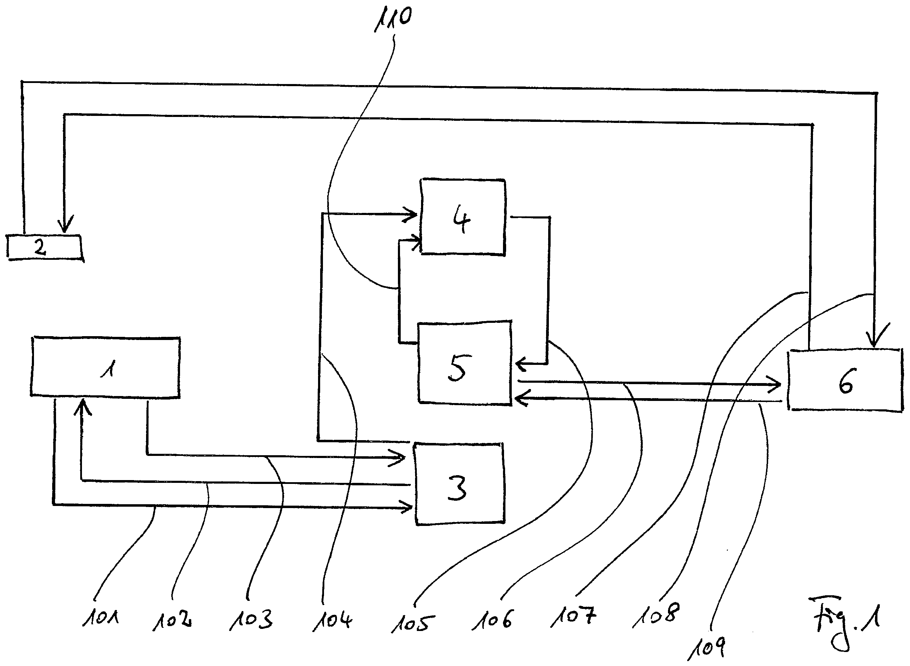

Am Geldautomaten 1 in Figur 1 registriert sich ein Benutzer (nicht dargestellt) zur Authentifizierung über ein in seinem Besitz befindliches Mobiltelefon 2 in einer geschlossenen Benutzergruppe.

Der Vorteil bei einer Identifizierung und Registrierung am Geldautomaten eines Kreditinstituts liegt darin, dass die Bank zwingend schon eine Face-to-Face-Kontrolle mit Vergleich von amtlichen Ausweisdaten vorgenommen hat. Der Benutzer benötigt für die Identifizierung und Registrierung am Geldautomaten eine Kundenkarte mit einer PIN. Eine solche wird von der Bank nur nach erfolgter Kontrolle ausgehändigt.

Der Benutzer führt seine Karte (nicht dargestellt) am Geldausgabeautomaten 1 ein und legitimiert sich durch seine PIN. Mit der PIN sind alle persönlichen Stammdaten einschließlich des Geburtsdatums des Benutzers im Datenbestand 3 des Kreditinstituts abrufbar, weil der Benutzer diese zwingend nach den Vorschriften des Geldwäschegesetzes bei der Kontoeröffnung angeben musste. Diese Daten wurden beim Eröffnen des Kontos anhand seines gültigen Personalausweises, Reisepasses oder eines ähnlichen Legitimationsdokuments und durch eine Face-to-Face-Kontrolle am Bankschalter abgeglichen.

Da der Geldausgabeautomat 1 auf den Datenbestand 3 des Kreditinstituts ohne weiteres zugreifen kann, ist das Wissen um das Alter des Benutzers am Geldausgabeautomaten 1 vorhanden.

In einer Steuersoftware des Geldausgabeautomaten 1 wählt der Benutzer einen Menüpunkt "Altersverifikation/Mobile Payment". Nach Auswahl dieses Menüpunkts fordert der Geldausgabeautomat 1 den Benutzer auf, eine Mobiltelefonrufnummer einzugeben.

Spätestens zu diesem Zeitpunkt aktiviert der Geldausgabeautomat 1 einen Prüfzugriff 101, in welchem die Daten der Bankkarte und die PIN überprüft werden. Sobald diese bestätigt sind, wird in einem Datenpaket 102 Information vom Datenbestand 3 zum Geldausgabeautomaten 1 zurückgesendet, nämlich zumindest eine Bestätigung der korrekten PIN und Stammdaten über den Benutzer.

Die vom Benutzer am Geldausgabeautomaten 1 eingetragene Mobiltelefonnummer wird sodann über dieselbe Datenverbindung, welche ohnehin seitens des Kreditinstituts zwischen dem Geldausgabeautomaten 1 und dem Datenbestand 3 installiert werden musste, in einer Übertragung 103 zum Datenbestand gesendet.

Vom Datenbestand 3 des Kreditinstituts werden in einer Datenübertragung 104 Daten über die Mobiltelefonrufnummer, das Geburtsdatum, eine Transaktionsnummer-abhängige Absenderkennung und eine vom Kunden festgelegte oder mit der Bankkarte identische PIN an eine geschlossene Benutzerdatenbank 4 übertragen. Dies ist notwendig, um - mit einfachen Worten ausgedrückt - den Geldausgabeautomaten mit einer Transaktionsnummer-abhängigen Absenderkennung das Mobiltelefon 2 des Benutzers über die zuvor am Geldausgabeautomaten 1 eingetragene Nummer anrufen zu lassen, wobei der Ruf nur bis zu einem Klingeln am Mobiltelefon 2 aufgebaut wird und sodann beendet wird.

Von der geschlossenen Benutzerdatenbank 4 werden in einer Datenübergabe 105 die Rufnummer des Mobiltelefons 2 sowie die Transaktionsnummer oder die Transaktionsnummer-abhängige Absenderkennung in Form einer Absenderrufnummer an einen Dämon 5 übergeben.

Der Dämon 5 übergibt die eingegebene Rufnummer des Mobiltelefons 2 und die Kennung in einer Wählanforderung 106 an eine Telekommunikationsanlage 6. Diese stellt eine erste Telefonverbindung 107 zum Mobiltelefon 2 des Benutzers her und überträgt als eigene Rufnummer (Clip-ID) die ihr übergebene Kennung in Form der Absenderrufnummer, welche Rückschluss auf die Transaktionsnummer und den Geldausgabeautomaten 1 erlaubt.

Sobald die erste Telefonverbindung 107 aufgebaut ist, also am Mobiltelefon 2 des Benutzers eine Anrufsignalisierung gestartet wird, beendet die Telekommunikationsanlage 6 den ersten Anruf 107. Da jedoch die Clip-ID übertragen wurde, ist am Mobiltelefon 2 die eindeutige Transaktions-abhängige Kennung in Form einer Anrufertelefonnummer vorhanden.

Der Geldausgabeautomat 1 hat zwischenzeitlich den Benutzer dazu aufgefordert, die übertragene Absenderrufnummer von seinem Mobiltelefon 2 aus zurückzurufen, um zu verifizieren, dass über die vom Benutzer 1 eingegebene Mobiltelefonrufnummer dasjenige Mobiltelefon 2 erreicht wird, welches in der Tat im Besitz des Benutzers ist, der gerade vor dem Geldausgabeautomaten 1 steht.

Nach erfolgreichem Rückruf 108 des Benutzers von seinem Mobiltelefon 2 mit übertragener Clip-ID wird dem Benutzer auf dem Bildschirm des Geldausgabeautomaten 1 mitgeteilt, dass die Registrierung abgeschlossen ist und ihm eine persönliche PIN per Übergabe-Einschreiben übersandt werden wird. Hierzu übergibt die Telekommunikationsanlage 6 in einer Datenübertragung 109 die übertragene Rufnummer des Mobiltelefons 2 an den Dämon 5.

Der Dämon 5 gibt anschließend in einer Bestätigungsübertragung 110 die Mobiltelefonnummer des Mobiltelefons 2 gemeinsam mit der Transaktionskennnummer an die geschlossene Benutzerdatenbank 4 weiter. Dort wird der Datensatz als bestätigt vermerkt.

Auf dem Postweg wird der Benutzer anschließend dazu aufgefordert, eine Kontoeinzugsermächtigung für ein etwaiges entgeltpflichtiges Telemedienangebot zu erteilen. Wenn dies geschehen ist und anschließend die Bestätigung der Zustellung durch den Benutzer bei der Bank eingegangen ist, wird der Benutzer für die Benutzung freigeschaltet, wobei die Kontoeinzugsermächtigung nicht notwendig ist. Das Zusenden der PIN per Einschreiben reicht bereits aus. Mit dem vorstehend beschriebenen Verfahren wird sichergestellt, dass die im Wege der Face-to-Face-Kontrolle erhobenen Daten bei dem Kreditinstituts der zu identifizierenden Person eindeutig zugeordnet wurden.

Im technischen Ablauf wird von der Benutzerdatenbank 4 zum Datenbestand 3 des Kreditinstituts schließlich die bestätigte Mobiltelefonrufnummer gemeinsam mit der Transaktionskennnummer übertragen (in der Figur nicht dargestellt). An die Datenbank des Betreibers eines Verkaufsautomatensystems werden anschließend lediglich die im Registrierungsprozess eingegebene Mobiltelefonrufnummer, eine zugehörige PIN und ein Altersmerkmal übergeben, wobei das Altersmerkmal wahlweise ein Kennzeichen für eine Altersgruppe oder das genaue Geburtsdatum beinhaltet. Das Altersmerkmal des zu registrierenden Benutzers wird zuvor - während der Überprüfung der PIN der eingegebenen Bankkarte - in den Stammdaten 3 des kontoführenden Kreditinstituts überprüft. Das Geburtsdatum selbst wurde eindeutig bei der Kontoeröffnung aufgenommen und ist Bestandteil der Stammdaten eines jeden Kreditinstituts.

Als Alternativen zur Registrierung in die geschlossene Benutzergruppe über einen Geldausgabeautomaten werden mehrere Varianten vorgeschlagen. So kann die Identifizierung beispielsweise über einen Online-Banking-Zugang erfolgen. Auch hier wird auf die bereits erfolgte Face-to-Face-Kontrolle bei Eröffnung des Kontos zurückgegriffen.

Beim Online-Banking muss der Benutzer, bevor er ein Menü aufrufen kann, seinen Login-Namen und seine PIN angeben. Beide wurden ihm zugewiesen, um für das Online-Banking freigeschaltet zu werden. Der Anmeldename und die PIN sind eindeutige Identifizierungsmerkmale, die ebenso wie die PIN am Geldausgabeautomaten mit allen persönlichen Stammdaten des Kunden verbunden sind, welche dieser bei der Kontoeröffnung angeben musste.

Nach Eingabe von Anmeldenamen und PIN gelangt der Kunde in ein entsprechendes Menü und wird dort durch den Abgleich mit den Stammdaten der Bank auch in Bezug auf sein Alter identifiziert. Er kann sodann - ebenso wie am Geldausgabeautomaten - einen Menüpunkt "Altersverifikation/Mobile Payment" auswählen.

Nach Anwahl dieses Menüpunktes erhält der Benutzer die Aufforderung, seine Mobiltelefonrufnummer einzugeben. Zur Überprüfung ruft der Server mit einer Transaktionsnummer-abhängigen Absenderkennung das Mobiltelefon des Kunden über eine von ihm einzugebende Rufnummer an und lässt in bekannter Weise nur einmal klingeln. Der Server fordert den Benutzer nun auf, die Absenderrufnummer mit seinem Mobiltelefon zurückzurufen, um zu verifizieren, dass es sich um ein Mobiltelefon handelt, welches in der Tat im Besitz des Benutzers steht. Das Verfahren wird wie bei der Identifizierung am Geldausgabeautomaten fortgesetzt und eine PIN per Übergabe-Einschreiben an den Benutzer übersandt.

Als weitere Varianten zur Identifizierung eines Benutzers bei der Registrierung kommen Varianten des in der Praxis etablierten Post-Ident-Verfahrens in Betracht. Das Post-Ident-Verfahren ist eine bereits anerkannte Form zur Identifizierung eines Benutzers unter Wahrung der notwendigen Face-to-Face-Kontrolle. Innerhalb des Post-Ident-Verfahrens sind von den Erfindern drei Varianten angedacht, welche nachfolgend als "Post-Ident-Web", "Post-Ident-Callcenter" und "Post-Ident-Classic" bezeichnet werden.

Beim Post-Ident-Web-Verfahren gibt der Benutzer, der sich für eine spätere Authentifizierung registrieren lassen möchte, auf einer Webseite im Internet seine Personalausweisdaten, seine Mobiltelefonrufnummer, eine E-Mail-Adresse sowie eine mehrstellige PIN ein. Diese Daten werden zunächst einer Plausibilitätskontrolle unterzogen. Wichtig ist hierbei insbesondere eine Plausibilitätskontrolle der eingegebenen Personalausweisdaten durch Abgleich mit den Angaben der unten auf dem Personalausweis angegebenen Datenzeile. Diese enthält auf einer Länge von 36 Stellen in einer vorgegebenen Struktur die Seriennummer, welche sich aus einer Behördenkennzahl und einer fortlaufenden Ausweisnummer zusammensetzt sowie mit einer Prüfziffer versehen ist, die Nationalität, das Geburtsdatum mit einer Prüfziffer, das Ablaufdatum des Personalausweises mit einer Prüfziffer und eine Prüfziffer über alle angegebenen Stellen.

Ist der vorgeprüfte Datensatz plausibel, erhält der Benutzer eine E-Mail mit einem geschützten PDF-Dokument im Anhang, welches seine Personalausweisdaten und eine "Transaktionstelefonnummer" enthält.

Dieses Dokument wird einem Postboten oder in einer Postfiliale vorgelegt. Die Postbediensteten wählen von einem authorisierten Telefon die auf dem Dokument angegebene "Transaktionstelefonnummer" und erhalten daraufhin eine Textnachricht mit den Personalausweisdaten des Benutzers.

Der Postbedienstete lässt sich vom zu registrierenden Benutzer dessen Personalausweis vorlegen und gleicht die Daten, die er erhalten hat, mit denjenigen auf dem Personalausweis ab. Außerdem stellt er durch eine Face-to-Face-Kontrolle sicher, dass der Personalausweis auf diejenige Person ausgestellt ist, welche vor ihm steht.

Wenn der Postbedienstete diese Kontrolle durchgeführt hat, sendet er eine Textnachricht an das Registrierungssystem zurück oder bestätigt dies über einen nicht-terminierten Anruf, so dass ab diesem Moment sichergestellt ist, dass die vom Benutzer eingegebenen Daten durch eine Face-to-Face-Kontrolle verifiziert wurden. Alterskennzeichen, Mobiltelefonrufnummer und PIN werden wiederum an den Server des Betreibers des Verkaufsautomatensystems weitergegeben, um die spätere Authentifizierung beim Aufruf eines entsprechenden Telemedienangebots zu gewährleisten.

In der Variante des Post-Ident-Callcenters ruft ein noch nicht registrierter Benutzer diejenige Telefonnummer an, welche er auch zum Tätigen der Transaktion, beispielsweise des Kaufs an einem Verkaufsautomaten oder eines Kaufs über eine Internetverkaufsplattform, anrufen müsste. Da das dort empfangende Gerät erkennt, dass die Telefonnummer noch nicht im Datenbestand vorhanden ist, wird der Anruf an ein Callcenter weitergeleitet.

Das Callcenter bietet ihm an, seine Personalausweisdaten aufzunehmen, um das Post-Ident-Verfahren einzuleiten. Die Daten werden zunächst vom Callcenter auf Plausibilität überprüft. Ist dies erfolgreich abgeschlossen, wird der potentielle neue Benutzer gebeten, eine mehrstellige Geheimnummer zu nennen. Das Angebot wird jedoch nicht augenblicklich für den Benutzer freigeschaltet, sondern ihm werden zunächst eine Transaktionsnummer und die PIN als Textnachricht zugesendet. Mit dieser Nachricht geht er zu einer Postfiliale oder bemüht einen Postboten. An dieser Stelle wird das Verfahren wie vorstehend beschrieben fortgesetzt, der Postbedienstete wählt also von einem authorisierten Telefon aus die auf dem Mobiltelefon des Benutzers gespeicherte "Transaktionstelefonnummer" und erhält daraufhin eine Textnachricht mit den Personalausweisdaten des Benutzers. Diese werden wie bereits beschrieben überprüft und anschließend gegenüber dem System bestätigt.

Bei der Variante des Post-Ident-Classic geht der Benutzer zu einem Schalter einer Postfiliale und füllt einen Post-Ident-Coupon aus, welcher zur Teilnahme am in dieser Patentanmeldung beschriebenen Alterskontrollverfahren berechtigt. Neben seinen Personalausweisdaten, die mit dem Ausweisdokument am Postschalter durch eine Face-to-Face-Kontrolle abgeglichen werden, trägt der Kunde in dem Formular seine Mobiltelefonrufnummer und eine mehrstellige PIN ein und unterschreibt das Formular. Der Post-Ident-Coupon wird gegebenenfalls nach Unterschrift durch einen Postbediensteten dem Betreiber des Gesamtsystems übersendet. Dieser benachrichtigt den neuen Benutzer über eine Textnachricht, dass dieser eine in der Textnachricht angegebene Telefonnummer anwählen und hinter der Telefonnummer seine PIN eingeben soll. Damit wird deutlich, dass es sich um den zuvor per Face-to-Face-Kontrolle im Post-Ident-Verfahren identifizierten Kunden handelt, dessen Mobiltelefonnummer, Altersmerkmal und PIN zur späteren Authentifizierung beim Nutzungsvorgang an den Server des Betreibers des Gesamtsystems weitergegeben werden.

Allein die Identifizierung eines Benutzers ist allerdings nicht ausreichend, um beispielsweise den Jugendschutz beim Verkauf von Tabak über Verkaufsautomaten zu gewährleisten. Es muss zusätzlich bei jedem einzelnen Nutzungsvorgang im Internet oder über andere Telemedien sichergestellt werden, dass nur der zuvor identifizierte Benutzer, der die Altersmerkmale der geschlossenen Benutzergruppe erfüllt, das Angebot nutzt. Dazu dient das folgende Authentifizierungsverfahren:

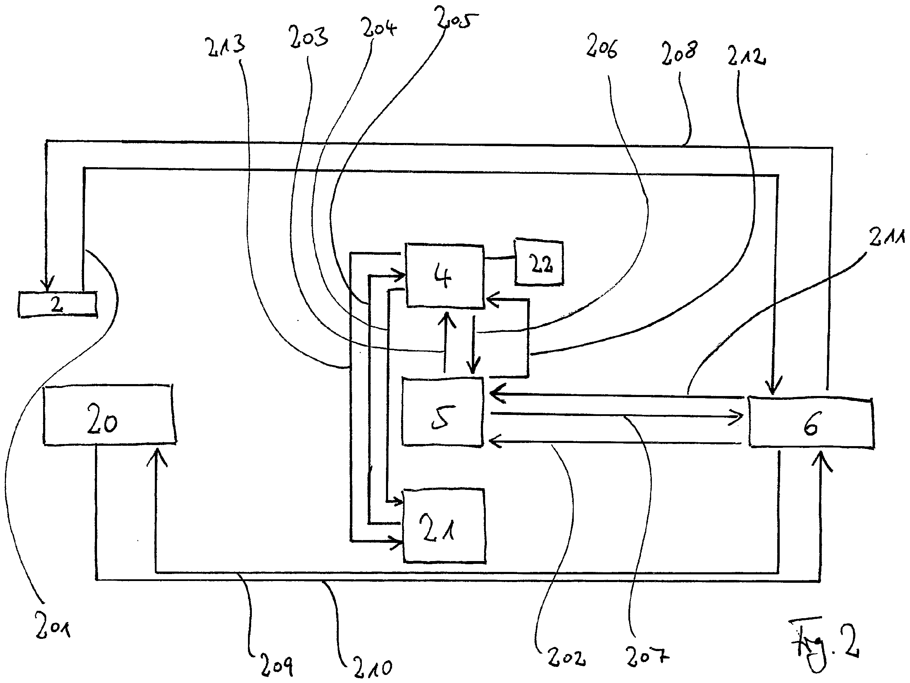

Der beispielsweise wie vorstehend identifizierte und registrierte Benutzer geht zu dem im öffentlichen Raum zugänglich aufgestellten Verkaufsautomaten 20 in Figur 2. Hierbei führt er sein Mobiltelefon 2 mit.

Um den Verkaufsvorgang anzustoßen, wählt der Benutzer mit dem Mobiltelefon 2 über einen Anruf 201 mit übertragener Clip-ID eine Telekommunikationsanlage 6 an. Hierzu verwendet er eine ihm bereits bekannte oder auf dem Verkaufsautomaten 20 angegebene Telefonnummer. Die Telefonnummer besteht aus einer festen Nummer, welche die Telekommunikationsanlage 6 als zum Verkaufsautomaten 20 gehörig erkennt, ergänzt um eine Suffix-Nummer, welche seine PIN eindeutig bezeichnet und idealerweise die PIN ist.

Im Suffix kann auch ein Verkaufsfach am Verkaufsautomaten 20 eindeutig bezeichnet sein.

Aufgrund der Telefonnummer auf dem Automaten 20 sind die Verkaufspreise der Produkte im Verkaufsautomaten 20 bekannt. Diese wurden beim Einrichten des Verkaufsautomaten 20 bevorzugt über ein mobiles Gerät an einen Dämon 5 übertragen. Somit wird der höchste Verkaufspreis im Verkaufsautomaten 20 ein Maß dafür darstellen, in welcher Höhe ein Limit bei der Bank des Benutzers angefragt werden soll.

Die Telekommunikationsanlage 6 übergibt in einer Datenübertragung 202 die Clip-ID und die angerufene Telefonnummer oder eine hieraus gemäß einer Tabelle abgeleitete Automatennummer des Verkaufsautomaten 20 an einen Dämon 5.

Der Dämon 5 leitet die Clip-ID und die Automatennummer in einer Weitergabe 203 an eine geschlossene Benutzerdatenbank 4 weiter. Die Datenbank 4 erkennt anhand ihres Datenbestands, dass die übertragene Clip-ID eine registrierte Telefonnummer ist und somit einem registrierten Benutzer zugehörig ist. Die Datenbank 4 fragt darauf hin für das elektronische Bezahlen mit einer Transaktions-ID ein Limit an einem Paymentserver 21 ab. Hierzu wird eine Datenverbindung 204 aufgebaut.

Der Paymentserver 21 gibt in einer Rückübertragung 205 eine eindeutige Genehmigungsnummer und einen als Limit verfügbaren Betrag an die Datenbank 4 zurück.

Die Datenbank 4 fragt beim Paymentserver 21 bevorzugt einen Betrag als Limit an, der über dem Verkaufspreis des vom Benutzer zu kaufen gewünschten Artikels liegt. Hierzu ist die Datenbank 4 mit einer Artikeldatenbank 22 verbunden und kann anhand der gewählten Nummer am Mobiltelefon 2 des Benutzers den Verkaufsautomaten 22 erkennen. Falls in der angewählten Nummer auch die Fachnummer eincodiert ist, kann die Datenbank 4 auch das gewünschte Produkt erkennen.

Mit diesen Informationen greift die Datenbank 4 von der Artikel-Datenbank 22 entweder den höchsten Verkaufspreis im Automaten oder den Verkaufspreis des gewünschten Produkts ab und fragt zumindest diesen Betrag als Limit beim Paymentserver 21 an.

Bevorzugt fragt die Datenbank 4 jedoch ein ganzzahliges Vielfaches des einfachen Verkaufspreises als Limit beim Paymentserver 21 an, damit der Benutzer durch eine zweite Anforderung unmittelbar auch einen zweiten Artikel erwerben kann, ohne dass die Limitabfrage erneut durchgeführt werden muss.

Anhand der Artikeldatenbank kann die geschlossene Benutzerdatenbank 4 auch schon ohne eine Limitüberprüfung am Paymentserver 21 gegebenenfalls einen angeforderten Verkauf ablehnen, beispielsweise wenn der Benutzer ein bestimmtes Altersmerkmal nicht erfüllt, welches aber zum Verkauf erforderlich ist. Beispielsweise kann es sich bei dem Benutzer um einen als solchen identifizierbaren 15jährigen handeln, während der angeforderte Artikel gemäß Information aus der Artikeldatenbank 22 ein Mindestalter von 16 oder 18 Jahren erfordert.

Wenn der Verkauf prinzipiell stattfinden kann und der Paymentserver 21 der Datenbank 4 ein ausreichend hohes Limit mitgeteilt hat, gibt die geschlossene Benutzerdatenbank 4 die Transaktions-ID und das ihr mitgeteilte Limit in einer Übertragung 206 an den Dämon 5 weiter.

Der Dämon 5 sendet die vom Mobiltelefon 2 übertragene Clip-ID und eine Rufnummer in einer Übertragung 207 an die Telekommunikationsanlage 6. Diese lehnt als Quittung 208 den Anruf des Mobiltelefons 2 ab.

Je nach konkreter Ausgestaltung des Gesamtsystems ruft die Telekommunikationsanlage 6 das Mobiltelefon 2 an, wobei dieser Anruf nur so weit aufgebaut wird, bis das Mobiltelefon 2 erkannt hat, dass das Verkaufsautomatensystem zurückgerufen hat.

Gleichzeitig gibt die Telekommunikationsanlage 6 eine Wecknachricht 209 an den Verkaufsautomaten 20 und überträgt über den hierzu durchgeführten nicht-terminierten Anruf in der Clip-ID einen Freischaltungscode.

Nachdem die Ware am Verkaufsautomaten 20 freigegeben und durch den Benutzer entnommen worden ist, meldet der Verkaufsautomat 20 über einen weiteren nicht-terminierten Anruf 210 den Abverkauf an die Telekommunikationsanlage 6 zurück. In die hierbei übertragene Clip-ID wird die Schachtnummer der entnommenen Ware codiert eingefügt, beispielsweise durch ein entsprechendes Suffix, welches einem Schacht am Verkaufsautomaten 20 eindeutig zugeordnet ist.

Die Daten aus der Abverkaufsmeldung vom Verkaufsautomaten 20 über die Clip-ID des nicht-terminierten Anrufs 210 zur Telekommunikationsanlage 6 gibt diese in einer Übertragung 211 an den Dämon 5 weiter. Dies kann am einfachsten dadurch geschehen, dass die vom Verkaufsautomaten 20 übertragene Clip-ID von der Telekommunikationsanlage 6 an den Dämon 5 weitergeleitet wird.

Der Dämon 5 ordnet die Clip-ID der Transaktions-ID des Vorgangs zu und sendet beide in einer Übertragung 212 an die geschlossene Datenbank 4 weiter. Diese erkennt den Vorgang als abgeschlossen und gibt die Clip-ID nebst der vom Paymentserver 21 generierten Genehmigungsnummer und dem gegebenenfalls durch mehrfache Entnahme erzeugten Endbetrag des Verkaufs in einer Zahlungsanforderung 213 an den Paymentserver 21 weiter.

Gleichzeitig kann die geschlossene Datenbank 4 in der Artikeldatenbank 22 die Bestandsdaten korrigieren, so dass das Gesamtsystem den genauen Füllstand jedes einzelnen Fachs im Verkaufsautomaten 20 kennt und für Befüllfahrten vorkommissionierte Befüllpakete erstellt werden können: Anhand der jeweils aktuellen telemetrisch übertragenen Bestandsdaten kann die Ware neu und exakt passend vorkommissioniert werden. Jeder Fahrer erhält für jeden Automaten eine bevorzugt versiegelte Transportbox, welche erst am Automaten geöffnet wird. Die Box ist bevorzugt mit einem Barcode versehen, welcher vor der Öffnung gescannt oder eingegeben wird. Der Fahrer erhält dann auf seinem MDE die Lieferscheindaten.

Nach der Bestückung sendet er den Lieferschein an den Automaten, beispielsweise über eine Infrarotverbindung. Wurden manuelle Änderungen an der Befüllung durchgeführt, so werden diese Daten über das Mobiltelefonnetz an den Server gesendet und in der Datenbank nachgepflegt.

Für den Benutzer stellt sich der gesamte Ablauf wie folgt dar:

Zunächst muss er sich beispielsweise am Geldausgabeautomaten für das Verfahren anmelden. Der gesamte Vorgang, beginnend mit dem Einführen der Karte, dem Eingeben der PIN, einer Menüauswahl zur Altersverifikation, der Eingabe seiner Mobilfunkrufnummer, dem Anruf des Automaten, dem Rückruf seitens des Benutzers, der Vergabe einer PIN, gegebenenfalls der Vergabe eines Limits, dem Erhalt einer Textnachricht mit Zugangsdaten und dem Entnehmen der Karte dauert nach Versuchen der Erfinder etwa 5 Minuten. Noch schneller ist sogar das Verfahren der Registrierung über einen Online-Banking-Zugang. Der gesamte Prozess mit dem Öffnen der Website, einer Menüauswahl zur Altersverifikation, der Eingabe einer Mobiltelefonnummer, einem Anruf des Servers, einem Rückruf seitens des Benutzers, der Vergabe einer PIN, gegebenenfalls der Vergabe eines Limits, der Eingabe einer TAN und dem Erhalt einer Textnachricht mit Zugangsdaten dauert hier nach Versuchen der Erfinder etwa 2 Minuten.

Am Automaten ist der Vorgang sehr leicht durchgeführt. Der Benutzer authentifiziert sich gegenüber dem Verkaufsautomatensystem dadurch, dass er eine Nummer und eine PIN wählt und einen Quittungston abwartet. Da der Anruf nicht angenommen worden ist, sind keine Kosten für den Benutzer angefallen. Der Automat wird vom Automatensystem freigeschaltet, der Benutzer wählt die Ware aus und entnimmt sie.

Eine Alternative kann im Kaufverfahren über das Internet wie folgt liegen:

Der registrierte Benutzer, dessen Altersmerkmal in der geschlossenen Datenbank des Betreibers des Verkaufssystems hinterlegt ist, öffnet eine für das Verfahren eingerichtete Website und wählt mit seinem registrierten Mobiltelefon die auf der Website in einer Maske angegebene Rufnummer. Der Benutzer wird dort mit einem automatisch geführten Telefonsystem ("Interactive Voice Recorder", "IVR") verbunden. Der IVR bittet den Benutzer, seine persönliche Identifikationsnummer (PIN) einzugeben. Nach Eingabe der PIN gelangt der Benutzer zum bezahlpflichtigen Internetangebot.

Durch die Einschaltung des IVR ist sichergestellt, dass ein unberechtigter Nutzer das System nicht über die Wahlwiederholung missbrauchen kann, die standardmäßig an den meisten handelsüblichen Telefonen verfügbar ist, sondern zusätzlich die nicht speicherbare PIN eingeben muss. Durch die Wahlwiederholung gelangt ein unberechtigter Nutzer lediglich zum IVR, nicht allerdings direkt zum bezahlpflichtigen Internetangebot.

Sobald die Telefonanlage des Betreibers des Verkaufssystems die Rufnummer des Kunden anhand der Clip-ID erkannt hat, lehnt diese den Anruf ab. Die Datenbank des Betreibers überprüft dann zunächst anhand der angewählten Rufnummer, ob die Altersanforderungen des in den Stammdaten eingetragenen Datensatzes der Website oder anderer Telemedien nach Abgleich mit den Stammdaten des Benutzers auf dem eigenen Server erfüllt sind. Auf dem eigenen Server werden lediglich ein Alterskennzeichen, die Mobiltelefonrufnummer und eine PIN gespeichert. Wenn dies der Fall ist, wird das Angebot freigeschaltet.

Es sei ausdrücklich darauf hingewiesen, dass ein Verkaufssystem, bei welchem auf dem Server in einer zentralen geschlossenen Datenbank lediglich ein Alterskennzeichen, eine Mobiltelefonrufnummer und eine PIN gespeichert sind, als eine eigenständige Erfindung angesehen wird.

Erfüllt der Anrufer die Alterskriterien für das spezielle Internetangebot nach Abgleich mit den Daten aus dem Server der Betreiberin nicht, so erhält der Benutzer eine entsprechende Information auf dem Bildschirm.

Sollte der Benutzer bei Anwahl des Inhalts seine Mobiltelefonrufnummer nicht übertragen, wird er über die Website darüber informiert, dass er die Rufnummerübermittlung an seinem Mobiltelefon deaktiviert hat. Er bekommt den Hinweis, dass er dieses einmalig durch die Eingabe der Tastenkombination "*35#" oder dem jeweils für diese Aktion gültigen GSM-Steuercode vor der auf der Website angegebenen Rufnummer veranlassen kann, um einmalig seine Rufnummer zu übermitteln.

Wenn innerhalb des geschlossenen Benutzerbereichs ein erfolgreicher Download stattgefunden hat, werden die IP-Adresse und die Session-ID unmittelbar gesperrt, um zu vermeiden, dass im direkten Anschluss an einen legitim getätigten Download ein weiterer Download von einer nicht authorisierten Person stattfindet.

Als weiterer Schritt gegen Missbrauch wird der Inhalt der Websites bevorzugt auf Basis der der Website zugeordneten Session-ID und der IP des Internetzugangs freigeschaltet. Beim Aufruf der Website wird die IP-Adresse als eindeutiges Zuordnungsmerkmal des Zugangs des Benutzers gespeichert. Durch das Öffnen der Website wird gleichzeitig diese IP einer Session-IP zugeordnet. Die Session-ID wird benötigt, um den Freischaltprozess nur für diese eine Anforderung eines geschützten Inhalts und nicht generell für diesen Zugang zu gewährleisten.

Die IP-Adresse wird gespeichert, um bei einem eventuellen Missbrauch des Systems über den Provider den Inhaber und den damit für die Nutzung verantwortlichen Anwender identifizieren zu können.

Die Session-ID hingegen dient zur eindeutigen zeitlichen Begrenzung des Zugangs. Diese Sicherheitstechnologie wird analog zu der beim Online-Banking bekannten Technologie eingesetzt.

Um die technische Sicherheit des Verkaufsanlagensystems möglichst hoch zu gestalten, wird vorgeschlagen, dass nur möglichst wenige Datenübertragungen in öffentlichen Netzen erfolgen. So wird ein Benutzer über ein öffentliches Mobilfunknetz eine Telekommunikationsanlage des Betreibers erreichen müssen, welche als Schnittstelle zwischen öffentlichem und dem geschlossenen System fungiert. Hinter einer an dieser Telekommunikationsanlage angeordneten Firewall befinden sich bevorzugt die sämtlichen Server des Betreibers des Verkaufssystems. Insbesondere sollte die Kommunikation zwischen den Servern und den Verkaufsautomaten über eine eigens hierfür vorgesehene Telekommunikationsanlage und ein geschlossenes Mobilfunknetz abgewickelt werden.

Für den Endkunden verändert sich der Kaufprozess beispielsweise bei einem Zigarettenautomat wie folgt: Bislang hat er Geld in den Automaten eingeworfen, dann ein bestimmtes Ausgabefach gewählt, an diesem gezogen und die Ware erhalten.

Sofern er sich ohne Bezahloption hat registrieren lassen, muss er nun das Geld in den Automaten einwerfen, dann die Freischaltung über sein Mobiltelefon erreichen, dann den Schacht auswählen und die entsprechende Schublade aufziehen und die Ware entnehmen, so dass sich lediglich die Freischaltung nach dem Einwurf des Geldes anschließt. Sofern sich der Benutzer mit Bezahloption hat registrieren lassen, muss er zunächst von seinem Mobiltelefon aus den Vorgang anstoßen und den Automaten damit aktivieren. Der Bezahlvorgang schließt sich erst anschließend für ihn sichtbar an, nämlich bei Belastung seines Kontos.

An Technik für Verkaufsautomaten wird vorgeschlagen, dass eine Automatensteuerung mit einem 16-Bit-Controller vorgesehen ist, welche dazu eingerichtet ist, neue Firmwares zu installieren. Eine solche Automatensteuerung kann auf einem Platinenträger mit den Außenmaßen von etwa 17,5 cm x 11,0 cm angeordnet werden.

An Schnittstellen wird vorgeschlagen, dass ein Münzwechsler, ein bargeldloses Bezahlsystem, ein Display, eine Tastatur, ein Banknotenleser und/oder ein Münzauszahlhopper vorgesehen sind. Der Automat sollte in der Lage sein, über GSM, GPRS, UMTS oder einen ähnlichen Mobilfunkstandard nicht-terminierte Anrufe aufbauen und entgegennehmen zu können. Gleichzeitig sollte für einen externen Anschluss beispielsweise zum Anschließen eines tragbaren PCs, eines Druckers oder weiterer Schnittstellen Sorge getragen sein.

In den Automaten können weiterhin vorteilhaft Münzprüfer, ein Erschütterungsmelder und/oder Temperatursensoren integriert werden. Um möglichst variabel arbeiten zu können, wird vorgeschlagen, dass eine Ausgangsmatrix für bis zu 32 Motoren und eine Eingangsmatrix für bis zu 32 Verkaufsschalter, Türschalter und/oder Rückgabetaster vorgesehen sind.

## Patentansprüche

1. Verfahren zur Interaktion einer Vorrichtung in Form eines Verkaufsautomaten (20) mit einem Benutzer einschließlich dessen Authentifizierung mittels eines Mobiltelefons, wobei eine unmittelbare Kommunikation zwischen dem Mobiltelefon (2) und der Vorrichtung nicht anfällt, wobei zur Authentifizierung Daten vom Mobiltelefon übertragen werden,
wobei der Benutzer mittels des Mobiltelefons (2) für seine Authentifizierung mit der Datenbankschnittstelle über einen nicht-terminierten Anruf kommuniziert um einen Kaufvorgang anzustoßen,
wobei die Vorrichtung mit der Datenbankschnittstelle über einen nicht-terminierten Anruf kommuniziert und zwar derart, dass die Vorrichtung (20) einen tabellenförmigen Code zum Übertragen verschiedener Werte benutzt und diesen tabellenförmigen Code über eine mitgesendete Clip-ID über den nicht-terminierten Anruf zur Datenbankschnittstelle übertragt, wobei die Datenbankschnittstelle den tabellenförmigen Code decodiert, und
wobei die Datenbankschnittstelle den tabellenförmigen Code zum Übertragen verschiedener Werte benutzt und diesen tabellenförmigen Code über eine mitgesendete Clip-ID über den nicht-terminierten Anruf zur Vorrichtung (20) übertragt, wobei die Vorrichtung (20) den tabellenförmigen Code decodiert, um die Vorrichtung mit einem Verkaufsvorgang reagieren zu lassen,
wobei das Verfahren folgendes umfasst:
- um den Verkaufsvorgang anzustoßen, wählt der Benutzer mit dem Mobiltelefon (2) über einen Anruf (201) mit übertragener Clip-ID eine Telekommunikationsanlage (6) an, hierzu verwendet er eine ihm bereits bekannte oder auf dem Verkaufsautomaten (20) angegebene Telefonnummer, die Telefonnummer bestehend aus einer festen Nummer, welche die Telekommunikationsanlage (6) als zum Verkaufsautomaten (20) gehörig erkennt, ergänzt um eine Suffix-Nummer, welche seine PIN eindeutig bezeichnet, wobei im Suffix ein Verkaufsfach am Verkaufsautomaten (20) eindeutig bezeichnet ist;
- aufgrund der Telefonnummer auf dem Automaten (20) sind die Verkaufspreise der Produkte im Verkaufsautomaten (20) bekannt, weil diese beim Einrichten des Verkaufsautomaten (20) an einen Dämon (5) übertragen worden sind, wodurch der höchste Verkaufspreis im Verkaufsautomaten (20) ein Maß dafür darstellt, in welcher Höhe ein Limit bei der Bank des Benutzers angefragt wird;
- die Telekommunikationsanlage (6) übergibt in einer Datenübertragung (202) die Clip-ID und die angerufene Telefonnummer oder eine hieraus gemäß einer Tabelle abgeleitete Automatennummer des Verkaufsautomaten (20) an den Dämon (5);
- der Dämon (5) leitet die Clip-ID und die Automatennummer in einer Weitergabe (203) an eine geschlossene Benutzerdatenbank (4) weiter, wobei die Datenbank (4) anhand ihres Datenbestands erkennt, dass die übertragene Clip-ID eine registrierte Telefonnummer ist und somit einem registrierten Benutzer zugehörig ist,
- die Datenbank (4) fragt darauf hin für das elektronische Bezahlen mit einer Transaktions-ID ein Limit an einem Paymentserver (21) ab, hierzu wird eine Datenverbindung (204) aufgebaut;
- der Paymentserver (21) gibt in einer Rückübertragung (205) eine eindeutige Genehmigungsnummer und einen als Limit verfügbaren Betrag an die Datenbank 4 zurück;
- die Datenbank (4) fragt beim Paymentserver (21) einen Betrag als Limit an, der über dem Verkaufspreis des vom Benutzer zu kaufen gewünschten Artikels liegt; hierzu ist die Datenbank (4) mit einer Artikeldatenbank (22) verbunden und kann anhand der gewählten Nummer am Mobiltelefon (2) des Benutzers den Verkaufsautomaten (22) erkennen, wobei in der angewählten Nummer auch die Fachnummer eincodiert ist, wodurch die Datenbank (4) auch das gewünschte Produkt erkennt;
- mit diesen Informationen greift die Datenbank (4) von der Artikel-Datenbank (22) den höchsten Verkaufspreis im Automaten ab und fragt zumindest diesen Betrag als Limit beim Paymentserver (21) an;
- wenn der Verkauf stattfinden kann und der Paymentserver (21) der Datenbank (4) ein ausreichend hohes Limit mitgeteilt hat, gibt die geschlossene Benutzerdatenbank (4) die Transaktions-ID und das ihr mitgeteilte Limit in einer Übertragung (206) an den Dämon (5) weiter;
- der Dämon (5) sendet die vom Mobiltelefon (2) übertragene Clip-ID und eine Rufnummer in einer Übertragung (207) an die Telekommunikationsanlage (6), welche als Quittung (208) den Anruf des Mobiltelefons (2) ablehnt;
- die Telekommunikationsanlage (6) ruft das Mobiltelefon (2) an, wobei dieser Anruf nur so weit aufgebaut wird, bis das Mobiltelefon (2) erkannt hat, dass das Verkaufsautomatensystem zurückgerufen hat;
- gleichzeitig gibt die Telekommunikationsanlage (6) eine Wecknachricht (209) an den Verkaufsautomaten (20) und überträgt über den hierzu durchgeführten nicht-terminierten Anruf in der Clip-ID einen Freischaltungscode;
- nachdem die Ware am Verkaufsautomaten (20) freigegeben und durch den Benutzer entnommen worden ist, meldet der Verkaufsautomat (20) über einen weiteren nicht-terminierten Anruf (210) den Abverkauf an die Telekommunikationsanlage (6) zurück, wobei in die hierbei übertragene Clip-ID die Schachtnummer der entnommenen Ware codiert eingefügt wird, und zwar durch ein entsprechendes Suffix, welches einem Schacht am Verkaufsautomaten (20) eindeutig zugeordnet ist;
- die Daten aus der Abverkaufsmeldung vom Verkaufsautomaten (20) über die Clip-ID des nicht-terminierten Anrufs (210) zur Telekommunikationsanlage (6) gibt diese in einer Übertragung (211) an den Dämon (5) weiter, und zwar dadurch, dass die vom Verkaufsautomaten (20) übertragene Clip-ID von der Telekommunikationsanlage (6) an den Dämon (5) weitergeleitet wird; und
- der Dämon (5) ordnet die Clip-ID der Transaktions-ID des Vorgangs zu und sendet beide in einer Übertragung (212) an die geschlossene Datenbank (4) weiter; diese erkennt den Vorgang als abgeschlossen und gibt die Clip-ID nebst der vom Paymentserver (21) generierten Genehmigungsnummer und dem gegebenenfalls durch mehrfache Entnahme erzeugten Endbetrag des Verkaufs in einer Zahlungsanforderung (213) an den Paymentserver (21) weiter.

## Claims

1. Method for interaction of a device, having the form of a vending machine (20), with a user, including his authentication by means of a cell phone, where there is no direct communication between the cell phone (2) and the device and where data are transferred from the cell phone for authentication,
where the user communicates with the database interface by means of the cell phone (2) for his authentication via a non-terminated call in order to start a purchasing process,
the device communicating with the database interface via a non-terminated call, and in the sense that the device (20) uses a tabular code for transmitting different values and transmits this tabular code to the database interface via the non-terminated call by means of a clip ID which is transmitted as well, wherein the database interface decodes the tabular code and wherein the database interface uses the tabular code for transmitting different values and transmits this tabular code to the device (20) via the non-terminated call by means of a clip ID which is transmitted as well, wherein the device (20) decodes the tabular code in order to let the device react by a purchasing process,
wherein the method comprises the following:
- to start the purchasing process, the user calls a telecommunication system (6) with his cell phone (2) by means of a call (201) with transmitted clip ID; for this purpose, he uses a telephone number which is already known to him or indicated by the vending machine (20), the telephone number consisting of a fixed number recognized by the telecommunication system (6) as belonging to the vending machine (20), complemented by a suffix number which uniquely identifies its PIN, where in the suffix a vending compartment in the vending machine (20) is uniquely identified;
- thanks to the telephone number in the machine (20), the purchase prices of the products in the vending machine (20) are known because they were transferred to a demon (5) when the vending machine (20) was set up, leading to the fact that the highest purchase price in the vending machine (20) is an indicator of the limit up to which an amount is requested from the bank of the user;
- in a data transmission (202), the telecommunication system (6) transfers the clip ID and the called telephone number or a machine number of the vending machine (20), derived therefrom by means of a table, to the demon (5);
- the demon (5) forwards the clip ID and the machine number to a closed user database (4) in a transmission process (203), with the database (4) recognizing by means of its set of data that the transmitted clip ID is a registered telephone number and thus belongs to a registered user;
- the database (4) then requests a limit from a payment server (21) for electronic payment by means of a transaction ID; for this purpose, a data connection (204) is established;
- in a retransfer (205), the payment server (21) returns a unique licensing number and an amount available as a limit to the database (4);
- the database (4) requests from the payment server (21) a limit amount which is above the purchase price of the article the user desires to buy; for this purpose, the database (4) is connected to an article database (22) and can recognize the vending machine (22) by means of the number called by the cell phone (2) of the user, with the compartment number also being encoded in the called number, which makes it possible for the database (4) to recognize the desired product;
- with this information, the database (4) acquires the highest purchase price in the vending machine from the article database (22) and requests at least this amount as the limit from the payment server (21);
- when the purchase can take place and the payment server (21) has indicated a limit to the database (4) which is sufficiently high, the closed user database (4) forwards the transaction ID and the limit indicated to it to the demon (5) in a transmission process (206);
- the demon (5) sends the clip ID transmitted by the cell phone (2) and a telephone number to the telecommunication system (6) in a transmission process (207); which telecommunication system rejects the call by the cell phone (2) as an acknowledgement (208);
- the telecommunication system (6) calls the mobile phone (2), with this call being established only to the point where the cell phone (2) realizes that the vending machine system has called back;
- at the same time, the telecommunication system (6) transmits a wake up message (209) to the vending machine (20) and transmits, for this purpose, an enable code via the non-terminated call in the clip ID which has been performed for this purpose;
- after the article has been enabled for release by the vending machine (20) and has been removed by the user, the vending machine (20) signals back the sale to the telecommunication system (6) via an additional non-terminated call (210), with the compartment number of the removed article being inserted in encoded form in the clip ID which has been transferred in this manner, and the encoding taking place by means of a respective suffix which is uniquely assigned to a compartment in the vending machine (20);
- the telecommunication system (6) forwards the data of the sales message from the vending machine (20) to the telecommunication system (6) by means of the clip ID of the non-terminated call (210), to the demon (5) in a transmission process (211), namely by forwarding the clip ID transmitted by the vending machine (20) to the demon (5); and
- the demon (5) assigns the clip ID to the transaction ID of the process and sends both to the closed database (4) in a transmission process (212); this database recognizes the process as concluded and forwards the clip ID, plus the licensing number created by the payment server (21) and the final amount of sale, which has been created by a removal of possibly more than one article, to the payment server (21) in a request for payment (213).

## Revendications

1. Procédé pour l'interaction d'un dispositif sous la forme d'un distributeur automatique (20) avec un utilisateur y compris authentification de celui-ci au moyen d'un téléphone mobile, une communication directe entre le téléphone mobile (2) et le dispositif ne se produisant pas, des données étant transmises pour authentification par le téléphone mobile,
l'utilisateur communiquant au moyen du téléphone mobile (2) pour son authentification avec l'interface de la banque de données par le biais d'un appel non programmé pour lancer une opération d'achat,
le dispositif communiquant avec l'interface de la banque de données par le biais d'un appel non programmé et à vrai dire de telle manière que le dispositif (20) utilise un code tabulaire pour transmettre des valeurs différentes et transmet ce code tabulaire par le biais d'un ID (identifiant) de Présentation d'Identification de Ligne Appelante (PILA) [également CLIP (anglais) = Calling line identification presentation] envoyé conjointement par le biais d'un appel non programmé à l'interface de la banque de données, l'interface de la banque de données décodant le code tabulaire, et
l'interface de la banque de données utilisant le code tabulaire pour transmettre des valeurs différentes et transmettant ce code tabulaire au dispositif (20) par le biais d'un ID de PILA envoyé conjointement par l'appel non programmé, le dispositif (20) décodant le code tabulaire pour faire réagir le dispositif avec une opération de vente,
le procédé comprenant les étapes suivantes :
- pour lancer l'opération de vente, l'utilisateur avec le téléphone mobile (2) sélectionne par un appel (201) avec l'ID de PILA transmis, une installation de télécommunication (6), il utilise à cet effet un numéro de téléphone déjà connu de lui ou indiqué sur le distributeur automatique (20), le numéro de téléphone étant composé d'un numéro fixe, lequel identifie l'installation de télécommunication (6) comme appartenant au distributeur automatique (20), complète par un numéro de suffixe, lequel désigne clairement son numéro d'identification personnel (NIP ou *PIN),* un compartiment de vente sur le distributeur automatique (20) étant clairement désigné dans le suffixe,
- les prix de vente des produits dans le distributeur automatique (20) sont connus sur la base du numéro de téléphone sur le distributeur automatique (20), parce que ceux-ci ont été transmis à un démon (5) lors de l'agencement du distributeur automatique (20), le prix de vente maximum dans le distributeur automatique (20) représentant de ce fait une mesure à la hauteur de laquelle une limite est demandée auprès de la banque de l'utilisateur,
- l'installation de télécommunication (6) transmet dans une transmission de données (202) au démon (5) l'ID de PILA et le numéro de téléphone appelé ou un numéro de distributeur du distributeur automatique (20) dérivé de celui-ci d'après un tableau,
- le démon (5) transmet l'ID de PILA et le numéro de distributeur dans une retransmission (203) à une banque de données d'utilisateur fermée (4), la banque de données (4) identifiant à l'aide de son ensemble de données que l'ID de PILA transmis est un numéro de téléphone enregistré et appartient ainsi à un utilisateur enregistré,
- la banque de données (4) interroge d'après cela pour le paiement électronique avec un ID de transaction, une limite sur un serveur de paiement (21), une liaison de données (204) est établie à cet effet,
- le serveur de paiement (21) retourne dans une transmission de retour (205) un numéro d'autorisation certain et un montant disponible en tant que limite à la banque de données (4),
- la banque de données (4) demande auprès du serveur de paiement (21) un montant en tant que limite, qui se situe au-dessus du prix de vente de l'article que l'utilisateur souhaite acheter, la banque de données (4) est reliée à cet effet à une banque de données d'articles (22) et peut identifier le distributeur automatique (21) à l'aide du numéro choisi sur le téléphone mobile (2) de l'utilisateur, le numéro de compartiment étant également codé dans le numéro sélectionné, la banque de données (4) identifiant de ce fait également le produit souhaité,
- avec ces informations, la banque de données (4) prélève de la banque de données d'articles (22) le prix de vente maximum dans le distributeur automatique et demande au moins ce montant en tant que limite auprès du serveur de paiement (21),
- si la vente peut avoir lieu et le serveur de paiement (21) de la banque de données (4) a communiqué une limite suffisamment élevée, la banque de données d'utilisateur (4) fermée transmet l'ID de transaction et la limite qui lui est communiquée dans une transmission (206) au démon (5),
- le démon (5) envoie l'ID de PILA transmis par le téléphone mobile (2) et un numéro d'appel dans une transmission (207) à l'installation de télécommunication (6), laquelle refuse l'appel du téléphone mobile (2) en tant qu'accusé de réception (208),
- l'installation de télécommunication (6) appelle le téléphone mobile (2), cet appel n'étant établi que dans la mesure où le téléphone mobile (2) a identifié que le système de distributeur automatique a rappelé,
- l'installation de télécommunication (6) indique simultanément un message d'éveil (209) au distributeur automatique (20) et transmet un code d'activation dans l'ID de PILA par le biais de l'appel non programmé exécuté à cet effet,
- une fois que la marchandise a été libérée sur le distributeur automatique (20) et enlevée par l'utilisateur, le distributeur automatique (20) communique en retour la vente à l'installation de télécommunication (6) par le biais d'un autre appel non programmé (210), le numéro de case de la marchandise enlevée étant introduit codé dans l'ID de PILA transmis à cet effet et précisément par un suffixe correspondant, lequel est attribué rigoureusement à une case sur le distributeur automatique (20),
- les données du message de vente venant du distributeur automatique (20) par le biais de l'ID de PILA de l'appel non programmé (210) à l'installation de télécommunication (6) sont transmises par celle-ci dans une transmission (211) au démon (5) et ce par le fait que l'ID de PILA transmis par le distributeur automatique (20) est retransmis au démon (5) par l'installation de télécommunication (6), et
- le démon (5) attribue l'ID de PILA à l'ID de transaction de l'opération et envoie ensuite les deux dans une transmission (212) à la banque de données fermée (4), celle-ci identifie l'opération comme réalisée et transmet l'ID de PILA avec le numéro d'autorisation généré par le serveur de paiement (21) et le montant final de la vente produit le cas échéant par enlèvement multiple dans un ordre de paiement (213) au serveur de paiement (21).
